# EUROPEAN PATENT APPLICATION

(11) **EP 2 676 929 A1**
(43) Date of publication of application: **25.12.2013**
(21) Application number: 13173220.8
(22) Date of filing: 21.06.2013
(51) Int. Cl.: C01B 21/083, G01N 21/03, G01N 21/05

(54) **Method and apparatus for removing contaminants from nitrogen trifluoride**

(30) Priority: 21.06.2012 US 201261662698 P; 07.06.2013 US 201313913069
(71) Applicant: AIR PRODUCTS AND CHEMICALS, INC., Allentown, PA 18195-1501 (US)
(72) Inventor: Johnson, Andrew David, Doylestown, PA 18901 (US); Langan, John Giles, Breinigsville, PA 18031 (US)
(74) Representative: Hatt, Anna Louise

(57) **Abstract**

A highly pure nitrogen trifluoride process fluid having an impurity content of 10 ppm or less can be effectively obtained by using radiation to cause the dissociation of chemical bonds in the impurity to form dissociation products and thereby make the removal of the dissociation products from the process fluid easier than the removal of the impurity from the process fluid.

## Description

### BACKGROUND OF THE INVENTION

The present invention relates to an efficient method for removing contaminants from fluid streams comprising nitrogen trifluoride and one or more undesired components, referred to as impurities or contaminants, that are not easily separated from the stream by typical, commercially feasible known separation methods. The typical contaminant may be small amounts of carbon tetrafluoride.

Nitrogen trifluoride (NF₃), which is widely used in the step of cleaning a CVD (chemical vapor deposition) device or etching a semiconductor in the electronic component manufacturing industry, is generally prepared by reacting fluorine (F₂) with ammonia (NH₃) and/or an ammonium salt, or by direct electrolysis of ammonium fluoride. Because of the use of a carbon electrode in some electrolysis processes, the product stream of nitrogen trifluoride thus obtained by electrolysis typically contains about 10-100 parts per million (ppm) of carbon tetrafluoride (CF₄) impurity.

The recent demand for ultra-high purity nitrogen trifluoride requires that the concentration of carbon tetrafluoride be 10 ppm or less.

The boiling points of nitrogen trifluoride and carbon tetrafluoride are very similar, -129°C and -128°C, respectively, differing by a mere 1°C, and the molecular sizes and polarities are also similar. Therefore, it has been very difficult to remove carbon tetrafluoride from nitrogen trifluoride by conventional industrial distillation or adsorption processes.

### BRIEF SUMMARY OF THE INVENTION

A method for purifying a process fluid comprising nitrogen trifluoride and one or more contaminants is provided comprising the step of: radiating the process fluid with light wherein said light comprises a frequency that is absorbed by said one or more contaminants such that one or more chemical bonds of said one or more contaminants dissociate to form dissociation products. In one embodiment of the method of the invention the one or more contaminants in said process fluid comprise CF₄.

An apparatus for causing the dissociation of one or more contaminants present in a process fluid comprising nitrogen trifluoride, and useful in any of the methods described herein is provided, said apparatus comprising a vessel, an inlet for said process fluid to enter said vessel and outlet for said process fluid to exit said vessel after treatment with radiation, said vessel also comprising an inlet for radiation or a radiation source and optionally one or more mirrors aligned to reflect the radiation. A radiation source and a light source will be used interchangeably to mean the same thing, and radiation and light will be used interchangeably to mean the same thing. The vessel may additionally comprise an inlet for a reactant fluid.

A highly pure process fluid comprising nitrogen trifluoride having an impurity content of 10 ppm or less can be effectively obtained by using radiation to cause the dissociation of chemical bonds in the impurity to form dissociation products and thereby make the removal of the dissociation products from the process fluid easier by common known separation methods than the removal of the impurity from the process fluid by those same methods.

By the methods and apparatuses of the invention, it is an object of the present invention to provide an efficient method for removing impurities from fluids.

Further aspects of the invention include:
#1. A method for purifying a process fluid comprising nitrogen trifluoride and one or more contaminants comprising the step of:
   radiating the fluid with light wherein said light comprises a frequency that is absorbed by said one or more contaminants such that one or more chemical bonds of said one or more contaminants dissociate to form one or more dissociation products.
#2. The method of #1, wherein said one or more contaminants in said process fluid is CF₄.
#3. The method of #1 further comprising the step of flowing said process fluid through a vessel during which the radiating step occurs,.
#4. The method of #1 further comprising the step of flowing a measured amount of said process fluid into a vessel prior to the radiating step, performing said radiating step and then flowing said process fluid out of said vessel chamber.
#5. The method of #1 wherein during said radiating step, said process fluid is at less than atmospheric pressure.
#6. The method of #1 wherein during said radiating step, said process fluid is at less than 13,000 Pascals.
#7. The method of #2 wherein said light comprises one or more wavelengths between 1250 and 1300 cm⁻¹.
#8. The method of #7 wherein the majority of the wavelenghts is at 1275 cm⁻¹.
#9. The method of #1 wherein said light in said radiating step is provided by one or more light sources selected from the group consisting of optical parametric oscillators, quantum cascade lasers, CO₂ lasers, gas lasers, excimer lasers, or mixtures thereof.
#10. The method of #1 further comprising the step of introducing before, during or after said radiating step a reactant fluid to react with said one or more dissociation products to form one or more reactant products.
#11. The method of #1 further comprising the step of separating said one or more dissociation products from said process fluid stream.
#12. The method of #10 further comprising the step of separating said one or more reactant products from said process fluid stream.
#13. The method of #1 further comprising a separating step after said radiating step selected from the group consisting of distillation, adsorption, membrane separation or chemical reaction.
#14. The method of #10 wherein said reactant fluid is selected from the group consisting of H₂O, O₂, CO₂, CO, NO, N₂O, and NO₂, H₂, methanol, ethanol, alcohol, hydrogen peroxide, ozone, CO, NO, N₂O, and NO₂ and mixtures thereof.
#15. The method of #10 wherein the dissociation products comprise CF₃ and F radicals.
#16. The method of #14 wherein the dissociation products are reacted with H₂O to form HF.
#17. The method of #1 wherein said dissociation products and dissociation byproducts adsorb or condense onto the surfaces of a vessel and said method further comprises the step of cleaning the vessel to remove the dissociation products or byproducts.
#18. The method of #15 wherein said dissociation product CF₃ reacts to form oligomers.
#19. The method of #12 wherein said light comprises one or more wavelengths between 1250 and 1300 cm⁻¹.
#20. An apparatus for causing the dissociation of one or more contaminants present in a process fluid comprising nitrogen trifluoride, said apparatus comprising a vessel, an inlet for said process fluid to enter said vessel and outlet for said process fluid to exit said vessel, said vessel also comprising an inlet for light and one or more light sources. Features described in connection with one aspect of the invention can also be used in connection with other aspects of the invention.

### BRIEF DESCRIPTION OF SEVERAL VIEWS OF THE DRAWINGS

Figure 1 shows the infrared absorption spectra of SF₆, C₂F₆, CF₄ and NF₃.
Figure 2 illustrates the vibrational energy levels of a carbon-fluorine bond as a function of distance.
Figure 3 shows one embodiment of a vessel of this invention used to expose the target composition to light in accordance with the method of this invention.

### DETAILED DESCRIPTION OF THE INVENTION

Process fluids, which include liquid streams and gas streams, used in semiconductor processing may contain impurities, or contaminants, as a result of their manufacturing processes. (The stream comprising nitrogen trifluoride comprising impurities that will be treated by the process of this invention may be referred to herein as the "target fluid", "target liquid", "target gas" or "process fluid", process liquid" or "process gas" or "fluid stream", "liquid stream" or "gas stream".) An impurity is any atom or molecule other than the desired composition, NF₃, being manufactured. For semiconductor manufacturing, the concentration of these impurities must be kept at trace amounts (e.g., 10 parts per million, ppm or less, or 8 ppm or less, or 5 ppm or less, or 1 ppm or less). The term "desired process fluid", "desired process liquid" or "desired process gas" will refer to the fluid stream comprising only NF₃ and either no impurities or impurities at or below trace amounts.)

The impurities may be introduced into the process fluid via one of the feedstock materials used in the manufacturing process to make the process fluid. Alternatively, impurities may be generated by the manufacturing process used to make the process fluid (nitrogen trifluoride) through side reactions between the feedstock materials or by reactions with materials of construction of the equipment used in the manufacture of NF₃. Further, although this is not common, the impurities may be introduced via leaks in the manufacturing, holding or shipping vessel or containers or during transfer to or from a manufacturing reactor, vessel or container or to or from a holding vessel or container or to or from a shipping vessel or container.

Whatever the origin of impurities, they are undesirable in the process fluid when the process fluid is used to manufacture electronic devices such as semiconductors, thin film transistors (TFTs), photovoltaics (PV), circuits, and the like. The performance or manufacturing yield of electronic devices is degraded by the presence of impurities in the process fluid. Manufacturers of electronic devices therefore specify very low acceptable concentrations of impurities in the process fluids, for example less than 10 ppm or other amounts as described above.

Impurities can be removed from process fluids, for example, gases, using a number of separation techniques including cryogenic distillation, physical adsorption, membrane transport, chemical reaction, or chemical adsorption. These purification processes are well-known. The separation or purification process typically requires that the impurity and the desired component(s) of the process fluid have different physical or chemical properties. Examples of physical properties include boiling point, and molecular weight. An example of a chemical property is the reactivity with another material, for example, flammability or hydrolysis.

When an impurity and the desired component(s) of the process gas have similar physical and chemical properties, separation or purification by cryogenic distillation, physical adsorption, membrane transport and chemical adsorption becomes very difficult and ineffective. This invention provides a method of separating impurities from a nitrogen trifluoride process fluid based upon differences in the optical properties of NF₃ and the one or more impurities in the process fluid. An example of an optical property that can be used for the purpose of removing the contaminant from the desired fluid stream is the difference in the wavelengths of light absorbed by the desired component(s) and the one or more impurities in the process fluid. For example, for an NF₃ process fluid stream with CF₄ therein as an impurity, the difference in infra-red (IR) absorption by the CF₄ and NF₃ can be used to remove the CF₄ from the NF₃ in the process fluid.

The description of the use of infra-red radiation that follows is not meant to be limiting. It is understood that different wavelengths of light which may be located in different areas of the spectrum of light may be used to cause the dissociation of the bonds of the one or more impurities in a process fluid comprising one or more desired components. The selection of the wavelength (or frequency) of the light is dependent upon what is necessary to cause the dissociation of the contaminant present in the process fluid. In the example of the invention wherein the process fluid comprises NF₃ and the impurity is CF₄, infra-red radiation is described below as useful in that process.

Absorption of radiation, for example, infra-red radiation by a molecule excites one or more of its vibrational modes. Typically, the molecule is only excited from the ground vibrational state (v=0) to the first excited state (v=1), and then collisions with other molecules cause the molecule to relax (return) to its ground vibrational state. If, however, the molecule is excited beyond the dissociation limit for the chemical bond that absorbed the energy before the molecule can relax, then the bond is broken and the molecule fragments. This technique is called infra-red multi-photon dissociation (IRMPD) since many light photons must be absorbed to excite the molecule beyond its dissociation level. Intense light, for example from one or more lasers or from one or more other high power light sources, is necessary to excite the molecule before it relaxes to the ground vibrational state. (As stated above, inter-molecular collisions cause the molecule to relax, so there is a time element to the delivery of enough energy to cause the dissociation and it is therefore preferred to deliver high energy light in a short period of time).

If the impurity present in the process fluid absorbs (for example, infra-red) radiation having a different frequency than that of the one or more desired components in the process gas, then the impurity can be selectively excited by providing light having the same frequency as the vibrational mode of the impurity.

This invention provides a process and an apparatus for selectively exciting the vibrational mode of an impurity in a target process fluid. The impurity may be excited beyond the bond-dissociation limit by selecting and using a monochromatic light source (that is, a light source that emits light in a narrow spectrum of wavelengths) having a frequency in a region of the spectrum, e.g. the IR spectrum, that the impurity absorbs. On the other hand, the one or more desired components including NF₃ in the process gas are preferably transparent to the light source having that frequency and hence are not vibrationally excited by the light source.

The types of contaminants that are most likely to be removed by the method of this invention are ones that have very strong infra-red absorbances that do not overlap with any absorbance by the desired components in the process fluid.

In one embodiment, the method of this invention is used to purify gaseous nitrogen trifluoride contaminated by trace carbon tetrafluoride through the removal of carbon tetrafluoride. The present invention provides an effective method which is capable of preparing ultra-high purity nitrogen trifluoride having a carbon tetrafluoride content of less than 10 ppm from a nitrogen trifluoride stream having carbon tetrafluoride present therein at an initial concentration that is greater than 10 ppm.

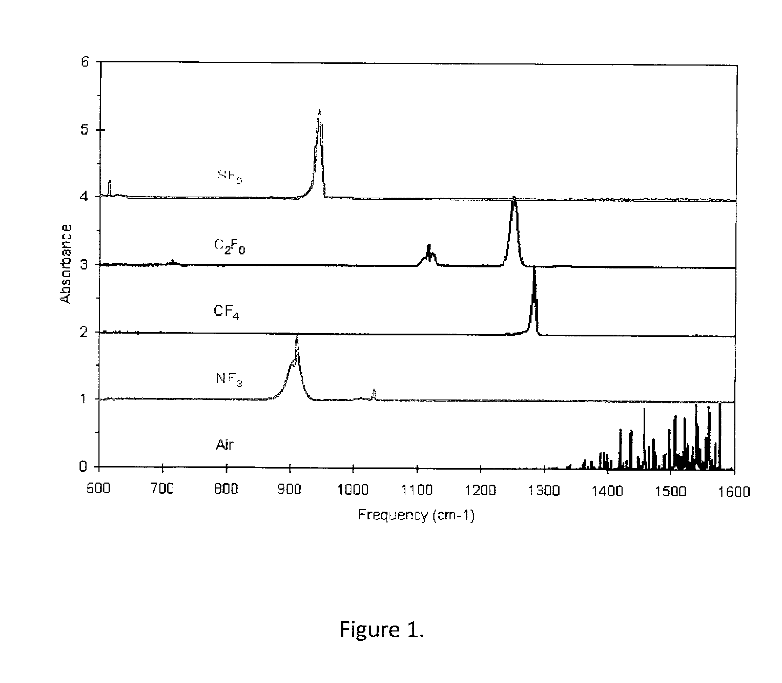

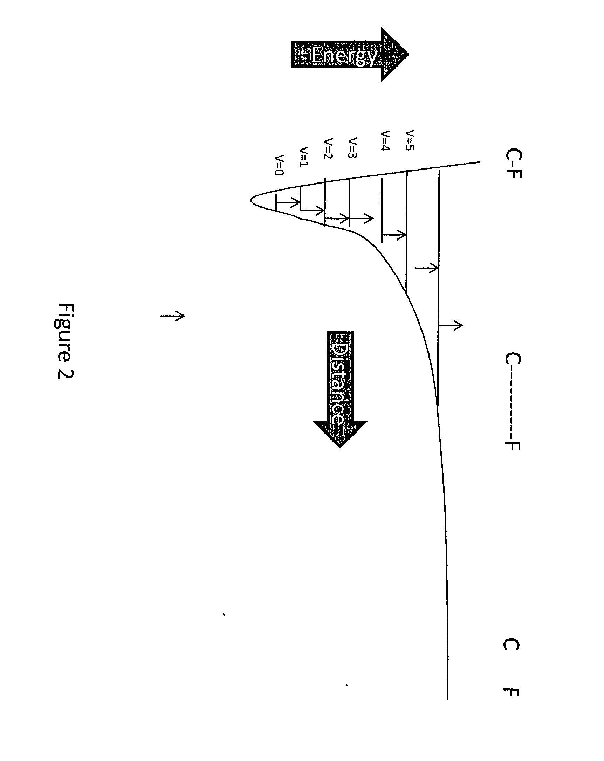

In one embodiment, CF₄ is selectively decomposed using infrared multi-photon dissociation (IRMPD). As shown in Figure 1, CF₄ has strong absorption of IR radiation between from 1250 to 1300 cm⁻¹ with the highest absorption at approximately 1275 cm⁻¹ (7.8 µm wavelength) due to a C-F bond stretching mode. By absorbing many photons, the C-F vibration can be excited beyond the dissociation limit of the bond. To dissociate the C-F bonds in a mole of CF₄, at least 130 kcal/mole (540 kJ/mole) is needed to be absorbed by the CF₄ molecules, Figure 2 shows the different vibrational states of the C-F bond before dissociation. Due to anharmonicity, the vibrational energy levels may not be equally spaced and two or more light sources may be needed or preferred to dissociate the C-F bond, depending on the coherence of the light sources and density of CF₄ vibrational states. For example, the lasers useful in the method of this invention may have one or more wavenumbers between 1250 and 1300 cm⁻¹ preferably with the majority of the energy at or near 1275 cm⁻¹.

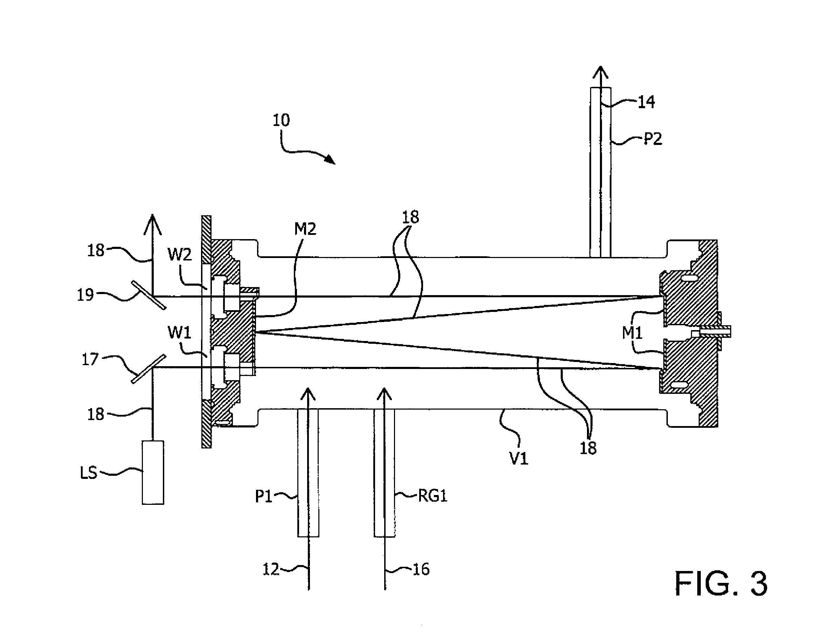

High efficiency can be achieved using a multi-pass cell, that is a vessel in or through which the light is reflected more than once as shown in Fig. 3 and will be described in greater detail below. NF₃ has a strong infrared absorption (Fig. 1) but at longer wavelengths (wavenumber of 900 cm⁻¹, corresponding to wavelength of 11.1 µm) than CF₄. By choosing one or more 1275 cm⁻¹ (7.8 µm) light sources, or one or more light sources having a majority of its power focused at 1275 cm⁻¹, the C-F bond is selectively excited rather than energy being lost to NF₃ absorption.

The amount of power may be provided by a single very powerful light source, or multiple light sources. The light may be provided simultaneously from the multiple light sources in a continuous or pulsed mode or a combination of continuous and pulsed light sources. In the present embodiment, IRMPD requires the C-F bond to be excited beyond its dissociation level before the molecule relaxes to the ground vibrational state through intermolecular collisions. Rather than a continuous light source, a laser may be pulsed with high peak power, for example, by using a Q-switch. A preferred method of generating >10 W of 7.8 µm light is to use non-linear schemes (e.g., optical parametric oscillator, OPO). Other laser sources that can be used include quantum cascade lasers. Other lasers that can be used are a CO₂ laser and other gas lasers. Other light sources include excimer lasers. Light from several lasers and/or several types of lasers can be used and/or concentrated by mirrors, lenses and optical concentrators.

Operating at reduced pressures, that is, operating at pressures less than atmospheric pressure (e.g., less than 13,000 Pascals, or less than 5000 Pascals, or less than 1,300 Pascals (<10 torr) or less than 500 Pascals or between from 5,000 to 500 Pascals, reduces the molecule collision frequency and thereby increases the time needed for a vibrationally excited molecule to relax to the ground state. The efficiency of absorbed light at separating the impurity from the process gas is therefore improved by using IRMPD at reduced pressures. Under ultra-high vacuum (UHV) conditions, for example at pressures less than approximately 500 X 10⁻⁶ Pascals or less than approximately 500 X 10⁻⁷ Pascals, the CF₄ does not experience collisions that cause vibrational relaxation to the ground state. By ionizing the NF₃ containing the CF₄ fluid and then confining the ionized NF₃ containing CF₄ fluid in for example an ion cyclotron resonance (ICR) cell, the time for the excited CF₄ molecule to relax to its ground state is extended, for example, to approximately 1 sec (from less than approximately 10⁻⁷ seconds if at 5000 Pascals). Consequently, at UHV and in ICR cells, lower powered lasers can be used to dissociate the CF₄.

As a result of the IRMPD, the impurity is dissociated into dissociation products which may be gas radicals rather than stable by-products. In the case of CF₄ it is dissociated into CF₃ and F (dissociation products). A reactant (preferably a reactant fluid i.e. liquid or gas) can be provided that converts the radicals generated by IRMPD into one or more stable molecules that may be more easily separated from the desired process fluid by common separation techniques; however, care has to be taken when selecting the reactant fluid so as not to introduce additional contaminants via the reactant fluid (e.g. gas) into the process fluid. The reactant fluid, if used, may be added to the vessel prior to radiating the CF₄ so that it is present to react with the radicals when formed.

The CF₃ and F radicals, dissociation products of the infrared multiphoton dissociation of the CF₄ (in the NF₃ process fluid) can be reacted with water (ultrapure water) (H₂O) (the reactant fluid) to form HF (a reactant product), which can subsequently be removed from the NF₃ by, for example, distillation or adsorption methods. The carbon atom will also react with moisture or oxygen (reactant fluids) to form CO₂ (a reaction product). H₂O and O₂ and CO₂ may be separated from NF₃ by, for examples, distillation or adsorption. Alternatively, the CF₃ radicals may polymerize into oligomers and stay in the gas (dissociation by-products, e.g., C₂F₆, C₂F₄) or the CF₃ and F radicals may adsorb or condense onto the surfaces of the vessel V1. Periodic cleaning of the vessel may be needed to remove the dissociation products or dissociation by-product residues; however, removal of the contaminants from the process fluid will have been accomplished. (The dissociation by-products are formed when dissociation products react.) Other reactant fluids (in addition to water) that may be used in the method of this invention include methanol, ethanol, and alcohol, hydrogen peroxide, oxygen, ozone, hydrogen, CO₂, CO, NO, N₂O, and NO₂ and mixtures thereof. To avoid the introduction of other contaminants into the NF₃ process fluid, ultrapure reactant fluids are preferred.

Figure 3 shows an embodiment of an apparatus useful for practicing this invention. The apparatus 10 comprises a light source LS and a vessel V1 having at least one input inlet, conduit or pipe (P1) for NF₃ target fluid (process fluid) having CF₄ therein from an NF₃ fluid source (not shown) and at least one output outlet, conduit or pipe (P2) for the exiting fluid, that is, the already photo-treated gas exiting the vessel V1. The nitrogen trifluoride target fluid is introduced into the vessel V1, via input conduit P1, in the direction shown by arrow 12. The flow rate and pressure of the target fluid is controlled using one or more of valves, flow controllers, pressure transducers, vacuum pumps, regulators, and other pressure or flow control means known to a person of ordinary skill in the art and therefore not shown. The optimal flow rate of the impurity, CF₄, (which is the fractional concentration of the flow rate of the process stream) into and out of the vessel V1 and residence time of the target fluid in the vessel V1 are selected such that the power (Watt) of the light source is sufficient to remove the impurity(ies) to below a target concentration (e.g. 10 ppm). Infra-red light 18 from the light source LS is introduced into the reaction vessel V1 through window W1 and reflects off mirror M1 and then M2 and then M1 again before exiting the vessel V1 through window W2. Mirrors M1 and M2 are located on the opposed ends of the vessel V1. Mirror M1 is located at the light inlet end. The geometry of mirrors M1 and M2 are chosen so that there are at least one or at least two or more reflections of light inside the vessel, such that the light reflects across the length or the width of the vessel at least two or at least three or at least four or more times. Although only 2 mirrors are shown within the vessel V1, a plurality of mirrors at various angles can be provided for reflecting the light through the process fluid inside the vessel. By reflecting the light multiple times through the vessel, the effective path length of light inside the vessel is long enough to allow sufficient absorption of light by the impurity molecule present in the process fluid. (Prior to entering and after exiting the vessel V1, the direction of the light may be modified by optional mirrors 17 and 19.)

As shown in Figure 3, an optional reactant fluid may be introduced into the vessel V1 through conduit or pipe RG1 before, during or after the radiation step. The flow of the reactant fluid is shown by arrow 16. The reactant fluid is chosen to react with the dissociation products of the impurity, that is, the impurity molecule after it has been dissociated by the light source. As stated above, examples of useful reactant gases include H₂O, O₂, CO₂, CO, NO, N₂O, NO₂, H₂, methanol, ethanol, alcohol, hydrogen peroxide, ozone, and mixtures thereof.

The apparatus shown in Figure 3 may be used for a batch process in which a valve (not shown) on line (conduit) P1 is closed after pumping or otherwise flowing the target fluid into the vessel to a desired pressure in the vessel V1 as detected by a pressure sensor (not shown) or via mass or volume flow controllers. Alternatively, the apparatus of Figure 3 could be used in a continuous flow mode, wherein there is a continuous flow of process fluid into the vessel via line P1, and a continuous flow of treated process fluid exiting the vessel V1 via line P2.

The vessel may be constructed of aluminum and stainless steel or other metal that is unreactive with the process fluid. The windows may be constructed of salts such as KBr, NaCl, ZnSe or other materials known to be transparent to IR light, for example other materials used for the construction of windows in lasers. The mirrors are made of materials that have high IR reflectivity, such as, silver, aluminum, gold and nickel.

In an alternative embodiment of the apparatus (not shown), a continuous flow reactor may be tubular in shape and the tube may be transparent to the wavelength of the one or more external light sources focused to pass through the walls of the tubular flow reactor and into the target process fluid flowing therethrough. The tube may be transparent all the way around the tube or it may have a window portion that may be along the tube length in the direction of the flow. The target process fluid would flow through an inlet end of the tubular reactor and out the outlet end for the target process fluid after treatment by the light, said inlet and outlet ends being typically on opposite ends of the reactor. In this embodiment, the light would enter the reactor and reflect back and forth across the tube in a direction that is substantially perpendicular to the flow of the target gas. One or more mirrors could be used as described above to reflect the light multiple times through the target fluid. The mirrors could be cylindrically shaped and located on the inside or the outside of the tube, depending on how large of an area of the tube is transparent to the light. An outlet for the light would be optionally provided.

A preceding cleanup step may occur before introducing the process gas into the treatment vessel for the light treatment. In some embodiments, the cleanup may concentrate the impurity to improve removal or reduce the fluid flow rate. The cleanup step may convert the impurity into another molecule that is more efficiently removed by the process and apparatus of this invention. The prestep may also remove one or more other impurities through other removal methods such as thermal processing, distillation, adsorption, or membrane separation before the process fluid is treated to the photolysis reaction or radiating step of this invention. The pre-cleanup step could be when the reactant is added and mixed with the target fluid before entering the light treatment vessel. This invention also contemplates a post-treatment clean up step to remove byproducts generated by the process. The post-treatment clean up step may include mixing the treated process fluid with a reactant fluid. It may also or alternatively include, the thermal processing, distillation, adsorption, or membrane separation to remove the dissociation products and/or excess reactant fluid added to react with the dissociation products and/or the products of the reactant fluid and dissociation products.

Additional process steps that precede setting up an apparatus and a method include: determining the one or more contaminants and the quantity that need to be removed and the frequency or frequencies at which the one or more contaminants absorb radiation on the light spectrum, and the wavelengths of the radiation absorbed by the desired one or more contaminants in the process fluid; determining what light source or light sources (e.g. laser(s)) in combination with mirrors or other energy concentrators will provide the necessary wavelength at the minimum required power or desired power (fluence) and in what mode, either continuous or pulsed to supply the radiation to the process fluid; determining the size of the vessel chamber and/or exposure time to ensure the absorption of enough radiation to dissociate the impurity; determining type of flow of the process stream through the chamber, batch, semi-continuous or continuous flow and/or determining the dissociation products and what additional steps may be necessary to separate the dissociation products from the process fluid. Depending upon, the process fluid and its contaminants, additional steps, either before or after the treatment of the process fluid with radiation, as described above may need to be performed. The operating conditions for the reaction vessel and method can be determined by a person of ordinary skill in the art when adapting this invention to a particular nitrogen trifluoride process stream.

### Example 1.

NF₃ gas containing CF₄ impurities is irradiated with light having a wavenumber of 1275 cm⁻¹. The light source is a multitude of quantum cascade lasers (QCL) such as those from Alpes Lasers (Neuchatel, Switzerland) focused to provide a fluence greater than 10 J/cm². The NF₃ gas containing CF₄ impurities would be contained in a gas vessel such as the white cells (long path gas cell) manufactured by CIC Photonics (Albuquerque, NM) having a volume of approximately 2 L. The windows of the vessel are transparent to infrared light such as those made of potassium bromide (KBr). The NF₃ process gas containing CF₄ impurities would be supplied to the vessel using a mass flow controller and the pressure in the vessel is maintained at 500 Pa using a vacuum pump (such as manufactured by Edwards) and a pressure control valve (such as manufactured by MKS, Andover, MA). The process sequence would be to evacuate the gas vessel to a pressure less than 5 Pa then isolate the gas vessel from the vacuum pump. Moisture is introduced into the gas vessel to a partial pressure of 10 Pa. The gas vessel is then filled with the NF₃ gas containing CF₄ to a total pressure of 500 Pa and irradiated with the multitude of QCL devices until the measured CF₄ concentration is less than 10 ppm. The NF₃ gas is removed from the gas vessel using the vacuum pump and transferred to a storage vessel. This process sequence is repeated continuously to process the NF₃ gas containing CF₄ impurities. The NF₃ gas in the storage vessel would then be purified via cryogenic distillation to remove byproducts such as HF.

### Example 2.

CF₄ impurities contained in NF₃ process gas are dissociated by irradiating the process gas under nearly collision free conditions using techniques involving trapped ion cyclotron resonance (ICR) spectroscopy. Quantum cascade lasers (QCL) such as those from Alpes Lasers (Neuchatel, Switzerland) could be used for the irradiation. The light source has a wavenumber of 1275 cm⁻¹ and an intensity of 10 W cm⁻². The output of the quantum cascade lasers (QCL) would be focused transverse to the magnetic field through a 92% transparent mesh to irradiate ions in the source region of an ICR cell. The collimated 6 mm diameter infrared beam is reflected back through the source region by a mirror finish on the bottom plate. The electron beam is pulsed (10 ms duration) to generate ionic species which are then stored for several seconds, during which time dissociation of the CF₄ impurity occurs. Pressure of the neutral NF₃ containing CF₄ process gas is 133 x10⁻⁷ to 133x10⁻⁶ Pa with neutral particle densities of 3X109 to 3X1010 molecules cm⁻³ and ion densities are 105 ions cm⁻³. The process sequence would be to introduce the NF₃ containing CF₄ impurities into the ICR cell and pulse the electron beam to generate CF₄ ions while irradiating with the QCL light source to dissociate the CF₄ into CF₃ and F radicals which react with the surfaces of the ICR cell. Periodically, the ICR cell will have to be cleaned to remove the residues on the surface of the cell.

While the invention has been described with respect to the above specific embodiments, it should be recognized that various modifications and changes may be made to the invention by those skilled in the art which also fall within the scope of the invention as defined by the appended claims.

## Claims

1. A method for purifying a process fluid comprising nitrogen trifluoride and one or more contaminants comprising the step of:
radiating the fluid with light wherein said light comprises a frequency that is absorbed by said one or more contaminants such that one or more chemical bonds of said one or more contaminants dissociate to form one or more dissociation products.

2. The method of claim 1, wherein said one or more contaminants in said process fluid is or comprises CF₄.

3. The method of claim 1 or claim 2, further comprising the step of flowing said process fluid through a vessel during which the radiating step occurs, or further comprising the step of flowing a measured amount of said process fluid into a vessel prior to the radiating step, performing said radiating step and then flowing said process fluid out of said vessel chamber.

4. The method of any one of the preceding claims, wherein, during said radiating step, said process fluid is at less than atmospheric pressure and is optionally at a pressure of less than 13,000 Pascals.

5. The method of any one of the preceding claims wherein said light comprises one or more wavenumbers between 1250 and 1300 cm⁻¹, and optionally has the majority of the energy of the light at 1275 cm⁻¹.

6. The method of any one of the preceding claims wherein said light in said radiating step is provided by one or more light sources selected from the group consisting of optical parametric oscillators, quantum cascade lasers, CO₂ lasers, gas lasers and excimer lasers.

7. The method of any one of the preceding claims, wherein the dissociation products comprise CF₃ and/or F radicals.

8. The method of any one of the preceding claims, further comprising the step of introducing before, during or after said radiating step a reactant fluid to react with said one or more dissociation products to form one or more reactant products.

9. The method of claim 8, wherein said reactant fluid is selected from the group consisting of H₂O, O₂, CO₂, CO, NO, N₂O, NO₂, H₂, methanol, ethanol, alcohol, hydrogen peroxide, ozone, and mixtures thereof.

10. The method of claim 7, wherein said dissociation product CF₃ reacts to form oligomers and/or the dissociation products are reacted with H₂O to form HF.

11. The method of any one of the preceding claims, further comprising the step of separating said one or more dissociation products, dissociation by-products, excess reactant fluid and/or reactant products from said process fluid stream.

12. The method of any one of the preceding claims, comprising a separating step after said radiating step selected from the group consisting of distillation, adsorption, membrane separation or chemical reaction.

13. The method of any one of the preceding claims, wherein said dissociation products, reactant products and/or dissociation by-products adsorb or condense onto the surfaces of a vessel and said method further comprises the step of cleaning the vessel to remove the dissociation products, reactant products and/or dissociation by-products.

14. An apparatus (10) for causing the dissociation of one or more contaminants present in a process fluid comprising nitrogen trifluoride, optionally in accordance with the method of any one of the preceding claims, said apparatus comprising a vessel (V1), an inlet (P1) for said process fluid to enter said vessel (V1) and outlet (P2) for said process fluid to exit said vessel (V1), said vessel (V1) also comprising an inlet (W1) for light and one or more light sources (LS).

15. The apparatus of claim 14, wherein the one or more light sources provide light with one or more wavenumbers between 1250 and 1300 cm⁻¹.
